# EUROPEAN PATENT SPECIFICATION

(11) **EP 2 551 608 B1**
(45) Date of publication and mention of the grant of the patent: **10.01.2018**
(21) Application number: 11425203.4
(22) Date of filing: 26.07.2011
(51) Int. Cl.: F24J 2/04, F24J 2/52, E04D 13/18, F24J 2/51

(54) **A photovoltaic modular cover for a building and method for its installation**
Modulare photovoltaische Abdeckung für ein Gebäude und Installationsverfahren dafür
Couverture modulaire photovoltaïque pour bâtiment et son procédé d'installation

(43) Date of publication of application: 30.01.2013
(73) Proprietor: Cappello Alluminio S.r.l., 97100 Ragusa (IT)
(72) Inventor: Cappello, Giuseppe, 97010 Giarratana (Ragusa) (IT); Cappello, Giovanni, 97010 Giarratana (Ragusa) (IT); Cappello, Giorgio, 97010 Giarratana (Ragusa) (IT)
(74) Representative: Rapisardi, Mariacristina

(56) References cited:
- EP-A1- 2 299 019
- WO-A2-2010/128462
- DE-A1-102008 028 489
- FR-A1- 2 537 705
- JP-A- 2004 353 194
- JP-A- 2009 263 875
- US-A1- 2009 133 690

## Description

The present invention relates to a photovoltaic modular cover for a building and to a method for its installation.

Covers for buildings known from the prior art, and in particular covers for industrial buildings, are known to comprise plates made of asbestos-based material or other material harmful to health and there is a need for decontamination of such covers. Decontamination may be achieved by substitution of the cover, preferably without the need for intervening with the stonework of the building itself.

EP 2 299 019 A1 discloses a modular cover suitable for substituting covers of existing industrial buildings and for the construction of covers for new industrial buildings. US 2009/0133690 A and JP 2004353194 A describe similar covers. One of the drawbacks of this modular cover is that, where at least one of the covering panels of the cover is a photovoltaic panel, the overall energy efficiency of the building is limited due to thermal losses through the photovoltaic panel. Moreover, the energy efficiency, correct functioning and longevity of the photovoltaic panel itself may be limited due to overheating thereof. In addition, the up-front cost of providing and installing the covering with the photovoltaic panel is high.

The technical task proposed by the present invention is therefore that of providing a photovoltaic modular cover for a building and a method for its installation that overcome the noted technical drawbacks of the prior art.

Within the scope of this technical task, one object of the invention is that of providing an improved photovoltaic modular cover for a building with reduced thermal losses.

Another object of the invention is that of providing a photovoltaic modular cover with improved energy efficiency, functioning, and/or longevity of the photovoltaic panel of the cover.

A last but not least object of the invention is that of providing a photovoltaic modular cover and a method for its installation which reduces up-front costs, and allows flexible and easy installation on existing or new buildings.

The technical task, as well as these and other objects, are achieved according to the present invention by providing a photovoltaic modular cover for a building according to claim 1.

The present invention also relates to a method for installation of a photovoltaic modular cover on a building according to claim 7. The use of fourth and fifth profiles in the cover, each having a first seat for retaining an insulating panel therebetween, allows for an insulating panel to be part of the cover, which in turn provides improved overall energy efficiency of the building by its thermal insulation and air-sealing properties.

The use of fourth and fifth profiles in the cover, each having a second seat for retaining a photovoltaic panel therebetween and at a distance spaced apart from the insulating panel, allows for ventilation of the photovoltaic panel. This helps to prevent overheating of the photovoltaic panel, which in turn aids energy efficiency, correct functioning and longevity thereof. Moreover, this avoids problems associated with the formation of condensation on the photovoltaic panel, and also helps to prevent overheating of the building itself.

Moreover, the seats in the fourth and fifth profiles allow for the possibility of installing the photovoltaic panel at a later or last stage in the process of laying the cover, while in the meantime the insulating panel provides a watertight and airtight cover for the building. Thereby the cost associated with providing the photovoltaic panel itself can be postponed to a later point in the installation process, hence avoiding high up-front costs. This arrangement also allows for great flexibility and ease of the installation process.

A further advantage of using profiles with seats for both an insulating panel and a photovoltaic panel is the removal of the need for separate means for installation of an insulating or photovoltaic panel, thereby reducing the complexity, cost, dimensions and weight of the cover while maintaining a robust design. The possibility of integrating a photovoltaic cover, in particular one with the possibility of thermal insulation and air-sealing properties, within the architectural limits of a building can advantageously also determine a new energy classification of the building.

Other characteristics of the present invention are moreover defined in the subsequent claims. Further characteristics and advantages of the present invention will be more evident from the description of a preferred, but not exclusive, embodiment of the photovoltaic modular cover for a building and its installation, according to the finding, illustrated in the attached non-limiting drawings, wherein:

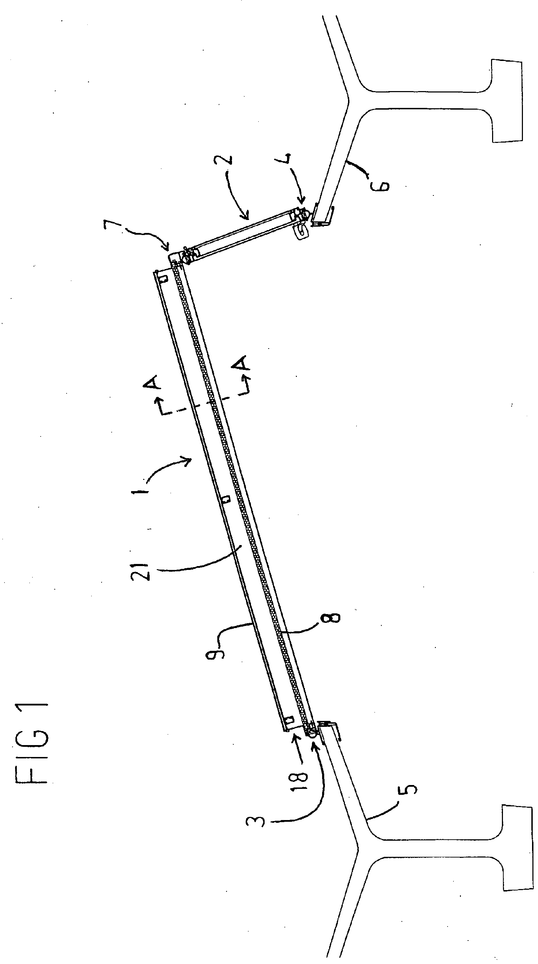

Figure 1 shows a front view of a module in accordance with one embodiment of the invention, applied between two covering Y-shaped beams of a building.

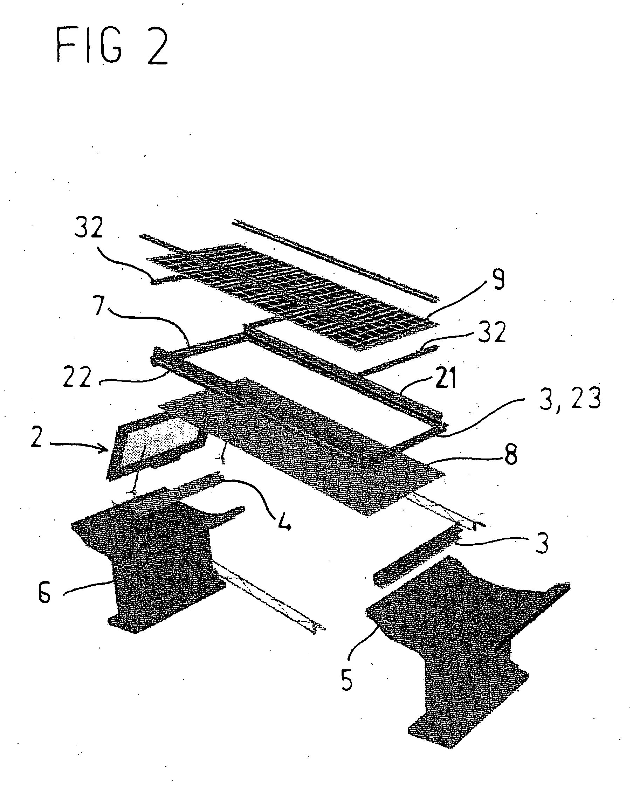

Figure 2 shows an exploded perspective view of one embodiment of the invention, applied between two covering Y-shaped beams of a building.

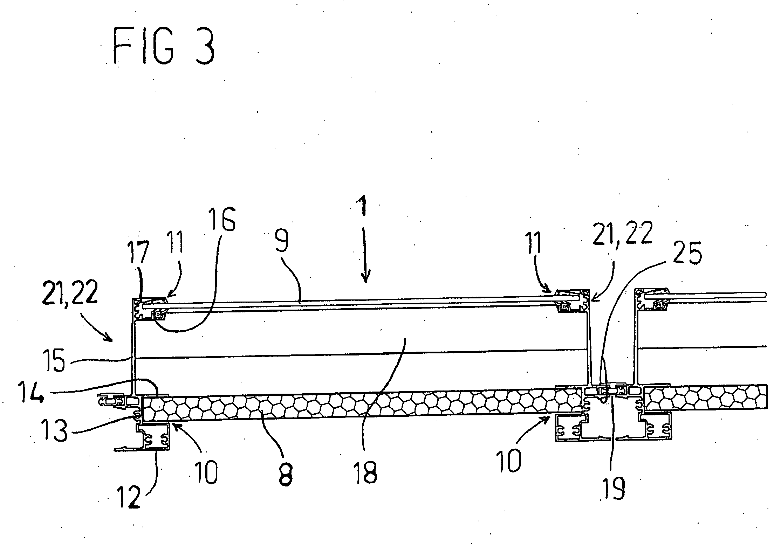

Figure 3 shows a cross-sectional view along the line A-A of figure 1, showing one embodiment a module with fourth and fifth profiles with an insulating panel and a photovoltaic panel inserted, coupled to a second module via an expansion joint.

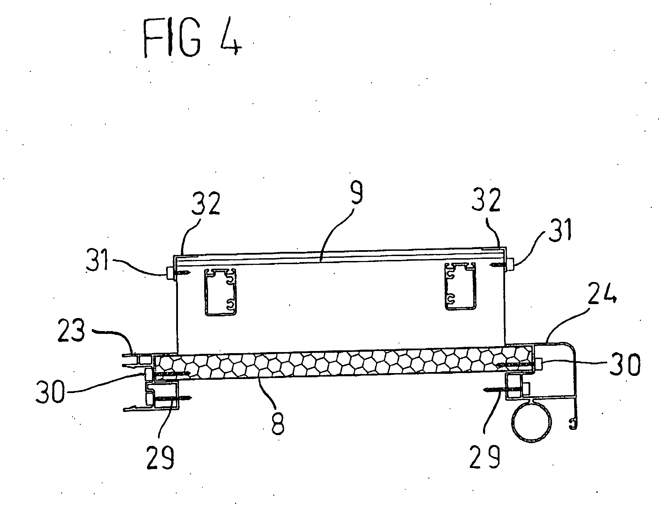

Figure 4 shows cross-sectional view of one embodiment of part of the first and third connection profiles with an insulating panel and a photovoltaic panel inserted.

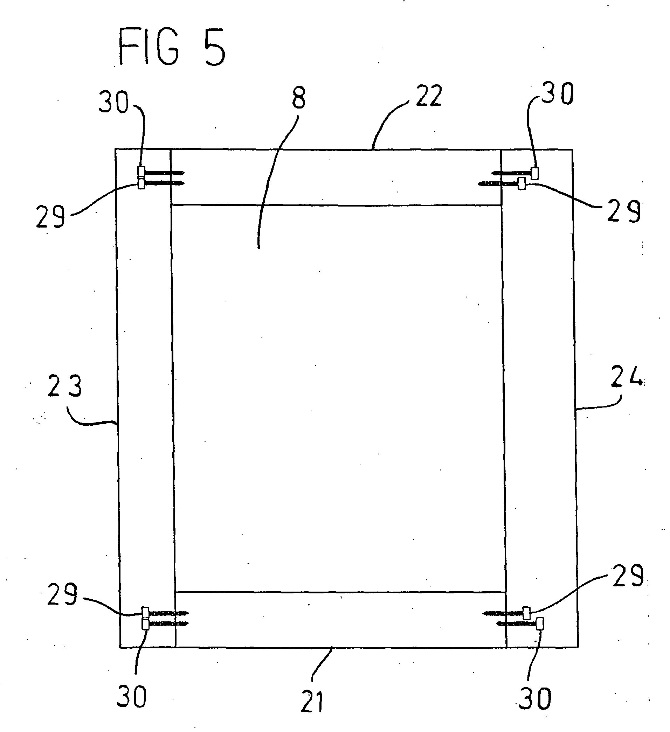

Figure 5 shows a simplified top view of the first, third, fourth and fifth profiles forming a frame for holding an insulating panel, with cut-away parts to show the connection pins.

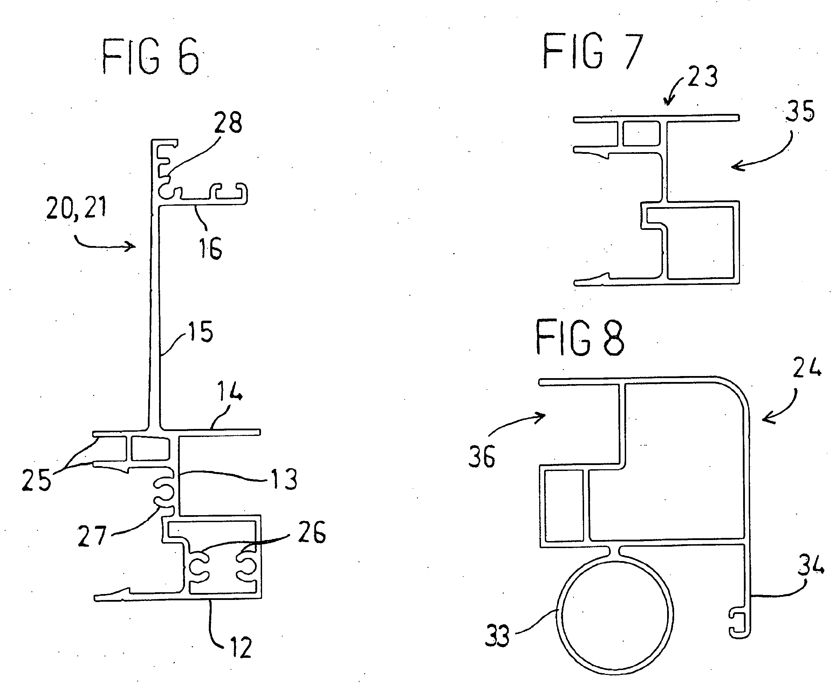

Figure 6 shows a cross-sectional view of the fourth and fifth profiles shown in figure 3.
Figure 7 shows a cross-sectional view of the part of the first connection profile shown in figure 4.
Figure 8 shows a cross-sectional view of the part of the third connection profile shown in figure 4.

The reference numerals refer to equivalent features in each of the figures.

With reference to the cited figures, the photovoltaic modular cover of a building comprises one or more modules each comprising a first and second covering panel 1 and 2 forming an angle one with respect to the other, a first and respectively a second group of connection profiles 3 and 4 of said first and respectively second panel 1 and 2 to a first and respectively second covering beam 5 and 6 of the building, and a third group of connection profiles 7 for interconnection between the first and second panel 1 and 2.

Each of the one or more modules further comprises fourth and fifth profiles 21 and 22 each extending between the fist and third profiles 3 and 7 and each having each having a first seat 10 for retaining an insulating panel 8 therebetween and a second seat 11 for retaining a photovoltaic panel 9 therebetween and at a distance spaced apart from the insulating panel 8.

The first covering panel 1 preferably comprises the insulating panel 8 and the photovoltaic panel 9. Advantageously, the photovoltaic panel 9 can be installed subsequent to the installation of the insulating panel 8. Alternatively, the cover can comprise the photovoltaic panel 9 without an insulating panel 8. Preferably the insulating panel 8 and the photovoltaic panel 9 each has a shape matching the perimetral shape of their supporting frame. This enables each of the insulating panel 8 and the photovoltaic panel 9 to provide a complete covering for the building independently of one another.

Preferably, the first and second seats 10 and 11 of said fourth and fifth profiles 21, 22 are spaced apart so as to form a ventilating chamber 18 between the photovoltaic panel 9 and the insulating panel 8 once these have been installed.

Advantageously, the insulating panel can be made of rigid, expanded polyurethane foam with a resin base with good insulating properties due to a total density of 40kg/m³, equating to approximately 10%.

In a preferred embodiment, the second covering panel 2 comprises a transparent window of glass or synthetic material, a further insulating panel or a further photovoltaic panel. Advantageously, the second covering panel 2 can be fixed or movable, preferably via motor, to allow ventilation of the building.

Naturally the photovoltaic panels of the various modules have an orientation and a serial connection suitable to optimise the production of electrical energy. Preferably the inclination of the photovoltaic panels is approximately 15° with respect to a horizontal plane. The possibility of regulation at least between 0° and 30° is however still maintained.

The first and respectively second group of profiles 3 and 4 are provided with vice connection means with the first and respectively second beam 5 and 6 and with hinge connection means with the first and respectively second panel 1 and 2.

The third group of profiles 7 is provided with hinge connection means between the first and second panel 1 and 2. The fourth and fifth profiles 21 and 22 each comprises a polygonale chamber 12 from which a first wing 13 externally departs which with one side of the chamber 12 and a first stop 14 fastened to the first wing 13 delimits the first seat 10, and further comprises an extension arm 15 extending from the first stop 14 and parallel to the first wing 13, the extension arm 15 having a second wing 16 extending therefrom with which a second stop 17 fastened to the extension arm 15 delimits the second seat 11.

The fourth and fifth profiles 21 and 22 are preferably each also provided with seats 26 in the chamber 12 and a seat 27 extending from the first wing 13 on the side opposite the seat 10, for screws 29 and respectively 30, for connection with parts 23 and 24 of the first and respectively third connection profiles 3 and 7. Preferably the fourth and fifth profiles 21 and 22 also each comprises a seat 28 in the junction between the extension arm 15 and the second wing 16, within the region of the second seat 11, for a screw 31 for connection with a cross rail 32. The cross rail 32 advantageously prevents the photovoltaic panel from sliding out of the seat 11 of the fourth and fifth profiles.

The modular cover is preferably made of a plurality of modules of the type described above, mutually approached by means of expansion joints 19 protected by suitable rubber shock absorbers. Preferably the fourth and fifth profiles 21 and 22 each comprises a set of parallel fins 25 extending perpendicular from the first wing 13, to house part of the expansion joint 19.

The first group of profiles 3 preferably comprises a part 23 suitable for holding the insulating panel in a seat 35 thereof, connectable to the fourth and fifth profiles 21 and 22 via screws 29 and 30, and connectable to hinge connection means in turn connectable to vice connection means for connection to the first beam 5.

The hinge connection means of the first and second group of profiles 3 and 4 with respectively the first and second panel 1 and 2 preferably each comprise a cylindrical portion of a profile housed in a portion of conjugated shape of another profile.

The vice connection means of the first and second group of profiles 3 and 4 with respectively the first and second beams 5 and 6 each comprise a first and respectively second clamping wing present in a first and respectively second profile having portions mutually coupled in a slidable way along an intersection piece controllable in order to modify the distance between the first and second clamping wing. Advantageously, the cylindrical portion and the clamping wing are realised on the same profile, which also has a pedicle for their mutual spacing.

The third group of profiles 7 preferably comprises a part 24 for holding the insulating panel in a seat 36 thereof, connectable to the fourth and fifth profiles 21 and 22 via screws 29 and 30, and incorporating part of the hinge connection means to the second panel 2. The hinge connection means between the first and second panel 1 and 2 comprises a cylindrical portion 33 of part 24, housed in a portion of conjugated shape of another profile connectable to the second panel 2. The part 24 has a wing 34 overlapping the profile which has the portion of conjugated shape (or, in an alternative embodiment, vice versa). The overlapping wing 34 is profiled in order to assure the overlapping by varying the rotation angle between the cylindrical portion 33 and the portion of conjugated shape.

The overlapping wing 34 therefore serves to create an efficient barrier to the infiltration of rain water through the cover.

The procedure for the laying of the modular photovoltaic cover onto the covering beams 5 and 6 of the building comprises the steps of mounting of the modules comprising the two panels 1 and 2, at least one of which comprising an insulating panel 8 held by fourth and fifth profiles, associated by forming an angle with a hinge connection, by fixing of first and second connection profiles 3 and 4 with a vice connection to said covering beams 5 and 6, by connecting said modules with a hinge connection to said first and second profiles 3 and 4, and by approaching mutually said modules by means of expansion joints. A subsequent step involves mounting a photovoltaic panel 9 above the insulating panel 8 by connecting said photovoltaic panel 9 to seats 11 of the fourth and fifth profiles holding said insulating panel 8.

In an alternative embodiment it is possible to construct the modules with both the insulating panel 8 and the photovoltaic panel 9 on the ground and subsequently lay the completed modules on the covering beams 5 and 6 by means of simple mechanical fittings.

In practice, any material type or size may be used, according to needs and the state of the art.

## Claims

1. Photovoltaic modular cover for a building comprising one or more modules each comprising a first and second covering panel (1, 2) forming an angle one with respect to the other, a first and respectively a second group of connection profiles (3, 4) of said first and respectively second panel (1, 2) to a first and respectively second covering beam (5, 6) of said building, and a third group of connection profiles (7) between
said first and second panel (1, 2), said first and respectively second group of profiles (3, 4) being provided with vice connection means with said first and respectively second beam (5, 6) and with hinge connection means with said first and respectively second panel (1, 2), said third group of profiles (7) being provided with hinge connection means between said first and second panel (1, 2), **characterised in that** said one or more modules each further comprises fourth and fifth profiles (21, 22) each extending between said first and third profiles (3, 7) and each having a first seat (10) for retaining an insulating panel (8) therebetween and a second seat (11) for retaining a photovoltaic panel (9) therebetween and at a distance spaced apart from said insulating panel (8), said fourth and fifth profiles each comprising a polygonal chamber (12) from which a first wing (13) externally departs which with one side of said chamber (12) and a first stop (14) fastened to said first wing (13) delimits said first seat (10), and further comprising an extension arm (15) extending from said first stop (14) and parallel to said first wing (13), said extension arm (15) having a second wing (16) extending therefrom with which a second stop (17) fastened to said extension arm (15) delimits said second seat (11).

2. Photovoltaic modular cover for a building according to claim 1 **characterised in that** said first covering panel (1) comprises said photovoltaic panel (9) and said insulating panel (8). claim 2,

3. Photovoltaic modular cover for a building according to **characterised in that** of said first and second seats (10, 11) of said fourth and fifth (3, 7) profiles being spaced apart so as to form a ventilating chamber (18) between said photovoltaic panel (9) and said insulating panel (8).

4. Photovoltaic modular cover for a building according to claim 2 or 3, **characterised in that** said insulating panel (8) and said photovoltaic panel (9) each has a shape matching the perimetral shape of their supporting frame.

5. Photovoltaic modular cover for a building according to one or more preceding claims, **characterised in that** it has a plurality of said modules mutually approached by means of expansion joints (19) protected by a suitable rubber shock absorber.

6. A building **characterised in that** it has a photovoltaic cover according to one or more preceding claims.

7. A procedure for the laying of a photovoltaic modular cover according to claim 1 onto covering beams (5, 6) of a building, comprising the steps of mounting of modules comprising two panels (1, 2), at least one of which comprising an insulating panel (8) held by fourth and fifth profiles, associated by forming an angle with a hinge connection, by fixing of first and second connection profiles (3, 4) with a vice connection to said covering beams (5, 6), by connecting said modules with a hinge connection to said first and second profiles (3, 4), and by approaching mutually said modules by means of expansion joints (19), **characterised in that** it comprises a subsequent step of mounting a photovoltaic panel (9) above said insulating panel (8) by connecting said photovoltaic panel (9) to seats (11) of said fourth and fifth profiles holding said insulating panel (8), said fourth and fifth profiles each comprising a polygonal chamber (12) from which a first wing (13) externally departs which with one side of said chamber (12) and a first stop (14) fastened to said first wing (13) delimits said first seat (10), and further comprising an extension arm (15) extending from said first stop (14) and parallel to said first wing (13), said extension arm (15) having a second wing (16) extending therefrom with which a second stop (17) fastened to said extension arm (15) delimits said second seat (11).

## Patentansprüche

1. Modulare photovoltaische Abdeckung für ein Gebäude, umfassend ein oder mehrere Module, von denen ein jedes eine erste und eine zweite Abdeckplatte (1, 2) umfasst, die relativ zueinander einen Winkel bilden, eine erste und jeweils eine zweite Gruppe von Profilen (3, 4) zur Verbindung der ersten und jeweils zweiten Platte (1, 2) mit einem ersten und jeweils zweiten Abdeckbalken (5, 6) des Gebäudes und
eine dritte Gruppe von Verbindungsprofilen (7) zwischen der ersten und zweiten Platte (1, 2), wobei die erste und jeweils zweite Gruppe von Profilen (3, 4) mit Mitteln zur Schraubstockverbindung mit dem ersten und jeweils zweiten Balken (5, 6) und mit Mitteln zur Scharnierverbindung mit der ersten und jeweils zweiten Platte (1, 2) ausgestattet sind, wobei die dritte Gruppe von Profilen (7) mit Mitteln zur Scharnierverbindung zwischen der ersten und zweiten Platte (1, 2) ausgestattet ist, **dadurch gekennzeichnet, dass** das eine oder die mehreren Module jeweils zudem vierte und fünfte Profile (21, 22) umfassen, die sich jeweils zwischen den ersten und dritten Profilen (3, 7) erstrecken und jeweils einen ersten Sitz (10) aufweisen,
um eine Dämmplatte (8) zwischen ihnen zu halten, und einen zweiten Sitz (11), um ein Photovoltaikpaneel (9) zwischen ihnen und in einer Entfernung, die von der Dämmplatte (8) beabstandet ist, zu halten, wobei die vierten und fünften Profile jeweils eine polygonale Kammer (12) umfassen, von der außenseitig ein erster Flügel (13) abgeht, der mit einer Seite der Kammer (12) und einer ersten Arretierung (14), befestigt am ersten Flügel (13) den ersten Sitz (10) abgrenzt, und zudem umfassend einen Ausdehnungsarm (15), der sich von der ersten Arretierung (14) und parallel zum ersten Flügel (13) erstreckt, wobei der Ausdehnungsarm (15) einen zweiten Flügel (16) aufweist, sich davon erstreckend, mit dem eine zweite Arretierung (17), befestigt am Ausdehnungsarm (15) den zweiten Sitz (11) begrenzt.

2. Modulare photovoltaische Abdeckung für ein Gebäude nach Anspruch 1, **dadurch gekennzeichnet, dass** die erste Abdeckplatte (1) das Photovoltaikpaneel (9) und die Dämmplatte (8) umfasst.

3. Modulare photovoltaische Abdeckung für ein Gebäude nach Anspruch 2, **dadurch gekennzeichnet, dass** der erste und der zweite Sitz (10, 11) der vierten und fünften (3, 7) Profile so beabstandet ist, dass eine Lüftungskammer (18) zwischen dem Photovoltaikpaneel (9) und der Dämmplatte (8) gebildet wird.

4. Modulare photovoltaische Abdeckung für ein Gebäude nach Anspruch 2 oder 3, **dadurch gekennzeichnet, dass** die Dämmplatte (8) und das Photovoltaikpaneel (9) jeweils eine Form, passend zur umfangseitigen Form deren Halterungsrahmen, aufweisen.

5. Modulare photovoltaische Abdeckung für ein Gebäude nach einem oder mehreren der vorhergehenden Ansprüche, **dadurch gekennzeichnet, dass** sie eine Vielzahl dieser Module aufweist, die mithilfe von Dehnungsfugen (19) gegenseitig angenähert werden, geschützt durch eine geeigneten Gummistoßdämpfer.

6. Gebäude, **dadurch gekennzeichnet, dass** es eine photovoltaische Abdeckung nach einem oder mehreren der vorhergehenden Ansprüche aufweist.

7. Verfahren zum Auflegen einer modularen photovoltaischen Abdeckung nach Anspruch 1 auf Abdeckbalken (5, 6) eines Gebäudes, umfassend die Schritte zum Montieren von Modulen, umfassend zwei Paneele (1, 2), wobei mindestens eins davon eine Dämmplatte (8) umfasst, gehalten von vierten und fünften Profilen, assoziiert durch Bildung eines Winkels mit einer Scharnierverbindung, durch Fixieren von ersten und zweiten Verbindungsprofilen (3, 4) mit einer Schraubstockverbindung an den Abdeckbalken (5, 6), durch Verbinden der Module mit einer Scharnierverbindung mit den ersten und zweiten Profilen (3, 4) und durch gegenseitiges Annähern der Module mithilfe von Dehnungsfugen (19), **dadurch gekennzeichnet, dass** es einen nachfolgenden Schritt zum Montieren eines Photovoltaikpaneels (9) über der Dämmplatte (8) durch Verbinden des Photovoltaikpaneels (9) mit Sitzen (11) der vierten und fünften Profile, haltend die Dämmplatte (8), umfasst,
wobei die vierten und fünften Profile jeweils eine polygonale Kammer (12) umfassen, von der außenseitig ein erster Flügel (13) abgeht, der mit einer Seite der Kammer (12) und einer ersten Arretierung (14), befestigt am ersten Flügel (13) den ersten Sitz (10) abgrenzt, und zudem umfassend einen Ausdehnungsarm (15), der sich von der ersten Arretierung (14) und parallel zum ersten Flügel (13) erstreckt, wobei der Ausdehnungsarm (15) einen zweiten Flügel (16) aufweist, sich davon erstreckend, mit dem eine zweite Arretierung (17), befestigt am Ausdehnungsarm (15) den zweiten Sitz (11) begrenzt.

## Revendications

1. Couverture modulaire photovoltaïque pour bâtiment comprenant un ou plusieurs modules comprenant chacun un premier et un second panneau de couverture (1, 2) formant un angle l'un par rapport à l'autre, un premier et respectivement un second groupe de profils de connexion (3, 4) dudit premier et respectivement second panneau (1, 2) à une première et respectivement seconde poutre de couverture (5, 6) dudit bâtiment, et
un troisième groupe de profils de connexion (7) entre ledit premier et second panneau (1, 2), ledit premier et respectivement second groupe de profils (3, 4) étant munis de moyens de connexion à étau avec ladite première et respectivement seconde poutre (5, 6) et avec des moyens de connexion à charnière avec ledit premier et respectivement second panneau (1, 2), ledit troisième groupe de profils (7) étant pourvu de moyens de connexion à charnière entre ledit premier et second panneau (1, 2), **caractérisé en ce que** un ou plusieurs modules comprennent chacun également des quatrièmes et cinquièmes profils (21, 22) s'étendant chacun entre lesdits premiers et troisièmes profils (3, 7) et ayant chacun un premier siège (10)
pour retenir un panneau isolant (8) entre eux et un second siège (11) pour retenir un panneau photovoltaïque (9) entre eux et à une distance espacée dudit panneau isolant (8), lesdits quatrièmes et cinquièmes profils comprenant chacun une chambre polygonale (12) à partir de laquelle une première aile (13) s'écarte extérieurement qui, avec un côté de ladite chambre (12) et une première butée (14) fixées à ladite première aile (13), délimite ledit premier siège (10), et comprenant également un bras d'extension (15) s'étendant à partir de ladite première butée (14) et parallèlement à ladite première aile (13), ledit bras d'extension (15) ayant une seconde aile (16) s'étendant à partir de celui-ci avec laquelle une seconde butée (17) fixée audit bras d'extension (15) délimite ledit second siège (11).

2. Couverture modulaire photovoltaïque pour bâtiment selon la revendication 1 **caractérisée en ce que** ledit premier panneau de couverture (1) comprend ledit panneau photovoltaïque (9) et ledit panneau isolant (8).

3. Couverture modulaire photovoltaïque pour bâtiment selon la revendication 2, **caractérisée en ce que** lesdits premiers et seconds sièges (10, 11) desdits quatrièmes et cinquièmes profils (3, 7) sont espacés de manière à former une chambre de ventilation (18) entre ledit panneau photovoltaïque (9) et ledit panneau isolant (8).

4. Couverture modulaire photovoltaïque pour bâtiment selon la revendication 2 ou 3, **caractérisée en ce que** ledit panneau isolant (8) et ledit panneau photovoltaïque (9) ont chacun une forme correspondant à la forme périmétrique de leur cadre de support.

5. Couverture modulaire photovoltaïque pour bâtiment selon l'une ou plusieurs des revendications précédentes, **caractérisée en ce qu'**elle comporte plusieurs desdits modules approchés mutuellement au moyen de joints de dilatation (19) protégés par un amortisseur en caoutchouc approprié.

6. Bâtiment **caractérisé en ce qu'**il comporte une couverture photovoltaïque selon l'une ou plusieurs des revendications précédentes.

7. Procédé pour la pose d'une couverture modulaire photovoltaïque selon la revendication 1 sur des poutres de couverture (5, 6) d'un bâtiment, comprenant les étapes de montage de modules comprenant deux panneaux (1, 2), dont au moins un comprend un panneau isolant (8) maintenu par des quatrièmes et cinquièmes profils, associés en formant un angle avec une connexion à charnière, en fixant des premiers et seconds profils de connexion (3, 4) avec une connexion à étau auxdites poutres de recouvrement (5, 6), en reliant lesdits modules avec une connexion à charnière avec lesdits premiers et seconds profils (3, 4), et en approchant mutuellement lesdits modules au moyen de joints de dilatation (19), **caractérisé en ce qu'**elle comprend une étape ultérieure de montage d'un panneau photovoltaïque (9) au-dessus dudit panneau isolant (8) en reliant ledit panneau photovoltaïque (9) à des sièges (11) desdits quatrièmes et cinquièmes profils maintenant ledit panneau isolant (8),
lesdits quatrièmes et cinquièmes profils comprenant chacun une chambre polygonale (12) à partir de laquelle une première aile (13) s'écarte extérieurement qui, avec un côté de ladite chambre (12) et une première butée (14) fixées à ladite première aile (13), délimite ledit premier siège (10), et comprenant également un bras d'extension (15) s'étendant à partir de ladite première butée (14) et parallèlement à ladite première aile (13), ledit bras d'extension (15) ayant une seconde aile (16) s'étendant à partir de celui-ci avec laquelle une seconde butée (17) fixée audit bras d'extension (15) délimite ledit second siège (11).
